# EUROPEAN PATENT APPLICATION

(11) **EP 3 228 544 A1**
(43) Date of publication of application: **11.10.2017**
(21) Application number: 17165254.8
(22) Date of filing: 06.04.2017
(51) Int. Cl.: B64D 27/02, F02C 3/04, B64D 27/10

(54) **HYBRID ELECTRIC AIRCRAFT PROPULSION INCORPORATING A RECUPERATED PRIME MOVER**

(30) Priority: 08.04.2016 US 201615093976
(71) Applicant: Hamilton Sundstrand Corporation, Charlotte, NC 28217-4578 (US)
(72) Inventor: HIMMELMANN, Richard A., Beloit, WI Wisconsin 53511 (US); TONGUE, Stephen E., Hampden, MA Massachusetts 01036 (US)
(74) Representative: Hughes, Andrea Michelle

(57) **Abstract**

A hybrid-electric propulsion system (10) includes a gas turbine engine (12), an electric machine (14) coupled to and rotatably driven by the gas turbine engine to produce AC electric power, an energy storage system (18), and a propulsion unit (16). The gas turbine engine includes a combustor (26) and a recuperator (20) that places an exhaust air flow that is downstream from the combustor in a heat exchange relationship with a compressed air flow that is upstream from the combustor to transfer thermal energy from the exhaust flow to the compressed flow. The propulsion unit includes a fan (44) and an electric motor (42) rotably coupled to the fan, the electric motor being driven by electric power from one of the electric machine or the energy storage system.

## Description

The present invention relates generally to hybrid electric propulsion systems, and more particularly to hybrid electric propulsion systems used for aircraft.

### BACKGROUND

Conventional propulsion systems used on aircraft include turbo-jet, turbo-prop, and turbo-fan engines. Each conventional propulsion system generally includes a core engine having, in axial flow series, an air intake, a low-pressure compressor (LPC), a high-pressure compressor (HPC), combustion equipment, a high-pressure turbine (HPT), a low-pressure turbine (LPT), and a core exhaust nozzle. The core engine works in a conventional manner such that air entering the air intake is accelerated and compressed by the LPC and directed into the HPC where further compression takes place. The compressed air exhausted from the HPC is directed into the combustion equipment where it is mixed with fuel and the mixture combusted. The resultant hot combustion products then expand through and thereby drive the high and low pressure turbines before being exhausted through the core exhaust nozzle. Conventional propulsion systems utilize thrust produced by expelling the core flow through the exhaust nozzle and, in the case of turbo-prop and turbo-fan engines, thrust produced by a fan driven by the gas turbine engine to propel aircraft during operation.

One attempt to improve fuel efficiency of aircraft propulsion engines involved the creation of hybrid electric propulsion systems, which additionally includes an electric generator driven by the gas turbine engine and an energy storage system for augmenting the gas turbine performance. The gas turbine engine can be designed to operate more efficiently over a narrower operating range while using the electric power from the generator and energy storage system to drive electric motors, extending the operational range of the gas turbine engine during take-off or other peak operational conditions. However, such systems still are susceptible to the thermal inefficiencies from the gas turbine engine, which decrease the efficiency of the overall propulsion system. Therefore a need exists for a hybrid-electric aircraft propulsion system with gas turbine engines having improved thermal efficiency.

### SUMMARY

A hybrid-electric propulsion system includes a gas turbine engine, an electric machine, an electrical energy storage system, and a propulsion unit. The gas turbine engine includes a combustor and a recuperator. The recuperator places an exhaust air flow that is downstream from the combustor in a heat exchange relationship with a compressed air flow that is upstream from the combustor such that the recuperator transfers thermal energy from the exhaust air flow to the compressed air flow. The electric machine is coupled to and driven by the gas turbine engine and produces AC electric power. The energy storage system is capable of storing DC electric power. The propulsion unit includes a fan and an electric motor coupled to the fan. The electric motor is driven by electric power received from one of the electric machine and the electrical energy storage system.

A method of operating a hybrid-electric propulsion system includes operating a gas turbine engine to rotably drive an electric machine that produces AC electric power. The method further includes using an energy storage system to store DC electric power and using the electric power from one of the energy storage system and the electric machine to drive an electric propulsion unit. Operating the gas turbine engine includes passing an exhaust air flow through a recuperator that places the exhaust air flow downstream from a combustor in a heat exchange relationship with a compressed air flow upstream from the combustor.

### BRIEF DESCRIPTION OF THE DRAWINGS

FIG. 1 is a schematic view of a hybrid electric propulsion system having a recuperated gas turbine engine.
FIG. 2A is a schematic view of a gas turbine engine having a recuperator disposed in the compressor section of the gas turbine engine.
FIG. 2B is a schematic view of a gas turbine engine having a recuperator disposed in the turbine section of the gas turbine engine.
FIGs. 3 and 4 are schematic views of other hybrid electric propulsion systems having recuperated gas turbine engines.

### DETAILED DESCRIPTION

The present invention relates generally to hybrid electric propulsion systems, and more particularly to hybrid electric propulsion systems used for aircraft. An example of a hybrid electric propulsion system is disclosed in U.S. Patent Application Serial No. 14/339,132 filed July 23, 2014, entitled HYBRID ELECTRIC PULSED-POWER PROPULSION SYSTEM FOR AIRCRAFT and published as U.S. Patent Application Publication No. 2016/0023773.

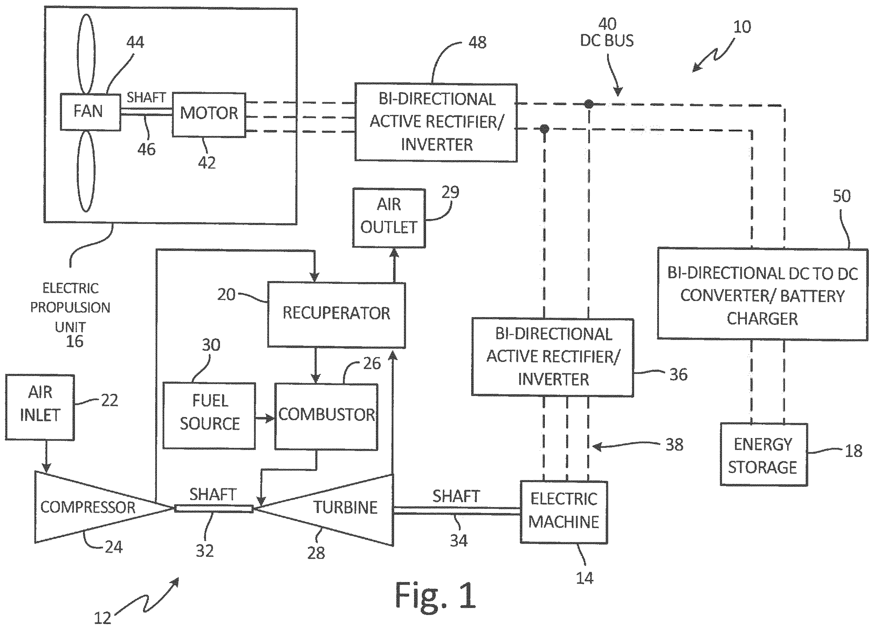

FIG. 1 is a schematic view of hybrid electric propulsion system 10 that utilizes a recuperated prime mover, such as gas turbine engine 12. Generally, operating gas turbine engine 12 drives electric machine 14 to produce electric power, which in turn, is used to operate electric propulsion unit 16 and to charge energy storage 18. When gas turbine engine 12 is placed in a standby mode (i.e., when gas turbine engine 12 is idling or shutdown), electric power from energy storage 18 drives electric propulsion unit 16. Propulsion system 10 can be operated such that gas turbine engine 12 operates continuously, intermittently, and a combination of continuous and intermittent operation. In each case, driving electric propulsion unit 16 with electric power from electric machine 14 and energy storage 18 improves the efficiency of propulsion system 10 over conventional propulsion systems. Furthermore, transferring heat from exhaust gases through recuperator 20 to transfer heat to a compressed air flow before combustion improves the thermal efficiency of gas turbine engine 12 and, thus, the efficiency of propulsion system 10.

Contrary to gas turbine engine 12 of described by FIG. 1, conventional propulsion systems have gas turbine engines designed to function during several operating conditions. Operating conditions include ground idle, takeoff, climb, cruise, loiter, egress, approach and landing. For example, in a turbo-prop engine, it is desirable to run the propeller at a fixed rpm for aerodynamic efficiency. Since the LPT or free turbine is mechanically linked to the propeller, it must turn at a fixed rpm along with the propeller. Depending on the propeller mode selected, the rotational speed may vary in the range of 100% to 80% of a maximum normal-operating rotational speed. "Maximum normal-operating speed" corresponds to the maximum, steady-state rotational speed at which the component is designed to operate. The HPT and HPC speeds vary depending on how much power is required. The typical rotational speed range for the HPC and HPT is between 100% and 50% of a maximum, normal-operating, rotational speed, which corresponds to a power output range. To function during multiple operating conditions, rotor geometries, stator geometries, and rotational speeds are designed to provide the most efficient compromise among the different operational conditions because optimizing for a single operating condition can cause conventional gas turbine engines to have poor performance or not function during other operating conditions.

Gas turbine engine 12 is configured to operate and is optimized for operation at a single operating condition, typically referred to as maximum continuous power output. "Maximum continuous power output" refers to the maximum, steady-state, power output produced by gas turbine engine 12 during operation, and generally corresponds to take-off operating conditions. Because gas turbine engine 12 is only required to operate at maximum continuous output, optimizing does not require design compromises among several operating conditions and enables gas turbine engine 12 to have greater fuel efficiency than conventional gas turbines. Single operation condition designs have several advantages including optimized rotor blade and vane geometry, optimized flow path geometry including air inlets and exhaust nozzles, and optimized fuel combustion. Moreover, because gas turbine engine 12 is incorporated into propulsion system 10 that uses electric motors to drive propulsion unit 16, gas turbine engine 12 can be designed without bleed air, or air bled from the high and low pressure compressors to operate aircraft functions. Gas turbine engine 12 can be located co-axially with propulsion unit 16, such as in conventional propulsion systems, or can be remotely located in the aircraft for optimal weight distribution or another practical reason. Gas turbine engine 12 can also be designed without and does not require gearboxes or other mechanical connections necessary to utilize the power generated from gas turbine 12 for propulsion because most electrical machines benefit from the higher speeds associated with gas turbines. Instead, gas turbine engine 12 is used to generate electrical power that can be transited through cables, wires, or other electrical conductors.

Furthermore, conventional gas turbines used for propelling fixed-wing aircraft typically have low thermal efficiencies in which a substantial portion of the energy produced by the gas turbine engine is expelled as heat instead of producing work. Because the heated exhaust gases are discharged from the gas turbine engine to produce thrust, reclaiming heat within the exhaust gases to heat the inlet air and thereby improve the thermal efficiency of the gas turbine engine typically reduces the thrust output of the gas turbine engine. However, since electric propulsion unit 16 generates a substantial portion of thrust within propulsion system 10, gas turbine engine 12 is not required to produce thrust. In some embodiments, exhaust gases expelled from gas turbine engine 12 produce no more than 10% of the total thrust of propulsion system 10 and, thus, propulsion unit 16 produces the majority of thrust within system 10.

Referring again to FIG. 1, gas turbine engine 12 of hybrid electric propulsion system 10 includes recuperator 20, air inlet 22, compressor 24, combustor 26, turbine 28, and air outlet 29. During operation, air enters gas turbine engine 12 through air inlet 22. The air received through air inlet 22 flows through compressor 24, which includes one or more stages of rotating blades and stationary vanes (not shown in FIG. 1). The blades and vanes of compressor 24 act to increase the pressure of the air passing through compressor 24, forming a compressed air flow. Downstream from compressor 24, the compressed air flow enters combustor 26. Injecting fuel from fuel source 30 and igniting the air-fuel mixture using means known in the art produces combustion, heating the compressed air flow and producing an exhaust air flow downstream from combustor 26. As exhaust air flows across turbine 28, which can include one or more stages of rotating blades and stationary vanes (not shown in FIG.1), turbine 28 extracts work from the exhaust flow, extracted work being used to drive compressor 24 via shaft 32 and to drive electric machine 14 via shaft 34. Downstream from turbine 28, the exhaust air flow is discharged from gas turbine engine 12 through air outlet 29 (e.g., an exhaust nozzle).

Recuperator 20 places the exhaust gas flow in a heat exchange relationship with the compressed air flow such that heat from the exhaust flow is imparted to the compressed air flow prior to flowing into combustor 26. As shown in FIG. 1, recuperator 20 receives compressed air from compressor 24 and receives exhaust air from turbine 28. In order to transfer heat from the exhaust air flow to the compressed air flow, recuperator 20 is a heat exchanger of any known type that can be incorporated into gas turbine engine 12. In some embodiments, recuperator 20 can be a plate-fin, cross-flow heat exchanger. When compressed air is heated prior to entering combustor 26, less fuel is needed to produce combustion of the air-fuel mixture within combustor 26.

Electric machine 14 is mechanically attached to gas turbine engine 12. Some embodiments of propulsion system 10 mount electric machine 14 co-axially with compressor 24 and turbine 28 via shaft 34, which can be coupled to turbine 28 as shown in FIG. 1 or to compressor 24. As described in greater detail below, electric machine 14 can function as a generator or as a motor in different operation phases. Electric machine 14 includes an arrangement of windings forming a stator and an arrangement of magnets that form a rotor. The windings of electric machine 14 include conductors, such as copper wires, that are mutually insulated from each other and that are wound around a generally cylindrical metallic core. The magnets of electric machine 14 are preferably permanent magnets because permanent magnets do not require external excitation during operation. However, the magnets of electric machine 14 could be electromagnets powered by a direct current (DC) source, an induction machine, a switch reluctance machine, or a combination electric machine such as permanent magnets that rely on reluctance for added performance. The combination of windings and magnets is determined by the electric power requirements of propulsion system 10 and/or other on-board systems and gas-turbine operation, the electric power and operational requirements being determined with engineering methods known in the art.

When electric machine 14 functions as a generator, the magnets are attached to and rotate with gas turbine engine 12, such as via shaft 34. The magnetic field produced by the magnets rotates with gas turbine engine 12 and interacts with the windings of electric machine 14. Generally, the windings of electric machine 14 are stationary; however electric machine 14 will function so long as there is relative movement between the windings and magnets. The interaction between the magnetic field produced by the magnets and the windings induces a current in the windings that are electrically connected to bidirectional, active rectifier-inverter 36 via three-phase AC power leads 38. When electric machine 14 is operated as a generator, rectifier-inverter 36 converts AC electric power produced by electric machine 14 to DC electric power before supplying DC power to DC bus 40.

Propulsion unit 16 includes electric motor 42, fan 44, and shaft 46. Motor 42 receives AC electric power from bidirectional, active rectifier-inverter 48. Rectifier-inverter 48 supplies AC electric power by inverting DC electric power supplied through DC bus 40. Electric motor 42 is coupled to fan 44 via shaft 46. Optionally, electric motor 42 can be coupled to fan 44 via gearing (not shown in FIG. 1) to allow electric motor 42 and fan 44 to rotate at different speeds. Generally, electric motor 42 benefits from rotating at higher speeds relative to fan 44, permitting electric motor 42 to produce higher shaft power while allowing fan 44 to rotate at a speed that more efficiently imparts work to the surrounding air. With the configuration of propulsion system 10 described by FIG. 1, the propulsion unit 16 can be controlled independently of the gas turbine engine speed.

In addition to supplying electric power to propulsion unit 16, the electric power generated by electric machine 14 can be directed to other on-board systems electrical systems, to charge energy storage 18, or to power propulsion unit 16 while charging energy storage 18. In each situation, electric machine 14 is configured to produce more AC electric power than is necessary to drive propulsion unit 16. Excess AC electric power can be converted to DC electric power by rectifier-inverter 36 and supplied through DC bus 40 to bidirectional, DC to DC converter-charger 50.

Converter-charger 50 regulates the flow of DC electric power into and from energy storage 18 and can utilize DC electric power from converter-charger 50 to charge energy storage system 18. When gas turbine engine 12 is not operating, DC electric power from energy storage 18 can be inverted by converter-charger 50 to drive propulsion unit 16 via DC bus 40.

Energy storage 18 includes one or more rechargeable components capable of storing electrical energy. In one embodiment, energy storage 18 can include an arrangement of rechargeable batteries. The capacity of energy storage 18 is dependent upon gas turbine engine 12 operation, the power requirements of propulsion unit 16, and the power requirements of other aircraft systems receiving power from propulsion system 10. When propulsion system 10 allows a longer discharge period, the capacity of energy storage 18 can be larger. By contrast, the capacity of energy storage 18 can be smaller when propulsion system allows a shorter discharge period.

Electric machine 14 can also be configured to function as a motor when DC electric power originating from energy storage 18 is converted to AC electric power by rectifier/inverter 36 and used to drive electric machine 14. The phases of AC electric power is out-of-phase with each other such that the interaction of the rotating magnetic fields produced within windings causes the rotor of electric machine 14 and, thus, a portion of gas turbine engine 12 to rotate. Using electric machine 14 in this manner allows compressor 24 to be accelerated to a self-sustaining speed that permits starting or restarting of gas turbine engine 12.

In some embodiments, rectifier-inverter 36 can include a passive rectifier in which converter-charger 50 is needed to control the voltage on DC bus 40. In other embodiments, rectifier-inverter 36 can be an active rectifier that controls the voltage of DC bus 40, thereby eliminating the need for converter-charger 50 to control the direct current bus voltage. The designs of rectifier-inverter 36 and converter-charger 50 are dependent on the power requirements of propulsion system 10 and/or other on-board systems and can be determined using conventional design methods.

In some embodiments, propulsion unit 16 can function as a generator to create electric power from windmilling fan 44. "Windmilling" refers to the rotation of fan 44 caused by the flow of air through fan 44 when gas turbine engine 12 is not operating. In such an embodiment, fan 44 acts as a large ram air turbine, thus eliminating the need to have a ram air turbine (RAT) on the aircraft as a backup system.

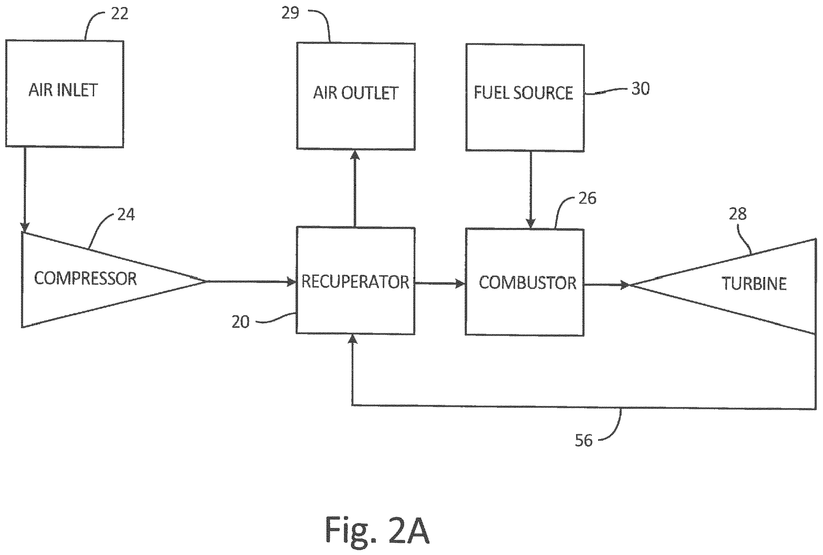

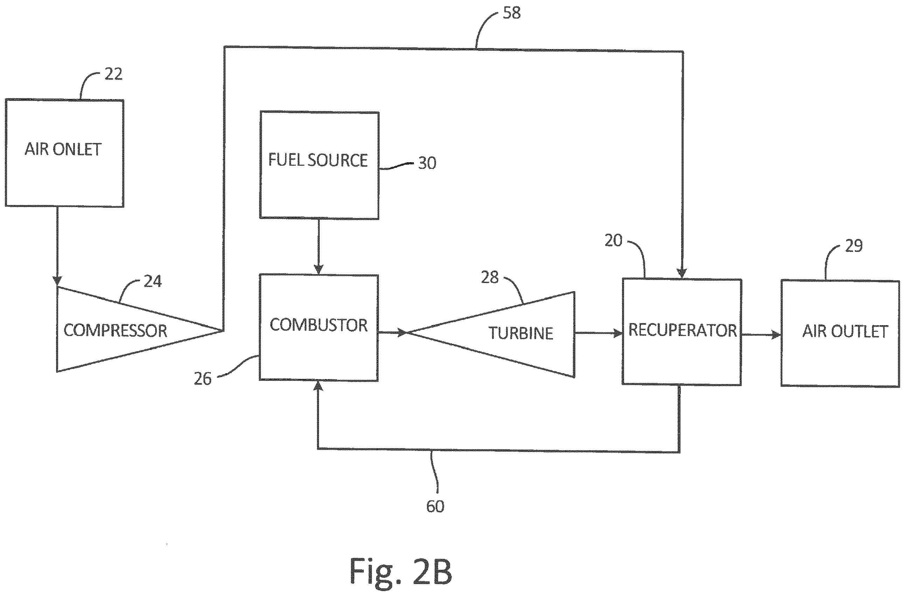

In addition to remotely located recuperator 20 within gas turbine engine 12, such as is schematically shown in FIG. 1, recuperator 20 can be located between compressor 24 and combustor 26 as shown in FIG. 2A or between combustor 26 and air outlet 29 (e.g., exhaust nozzle) as shown in FIG. 2B. Referring to FIG. 2A, recuperator 20 is disposed downstream from compressor 24 and upstream from combustor 26 in order to directly receive compressed air flow from compressor 24. Exhaust air is extracted downstream from turbine 28 and routed via line 52 to recuperator 20 before being discharged through air outlet 29. By contrast, FIG. 2B shows recuperator 20 disposed downstream from combustor 26 and upstream from air outlet 29 such that recuperator 20 directly receives exhaust flow from turbine 28. To reclaim heat from the exhaust flow, compressed air flow is routed via extraction line 54 through recuperator 20 before being delivered to combustor 26 via line 56. By directly connecting recuperator 20 to one of the exhaust flow and the compressed air flow, a portion of the pressure losses associated with flowing air through recuperator 20 can be reduced relative to a recuperator system in which both compressed air and exhaust flow are siphoned from compressor 24 and turbine 28 respectively.

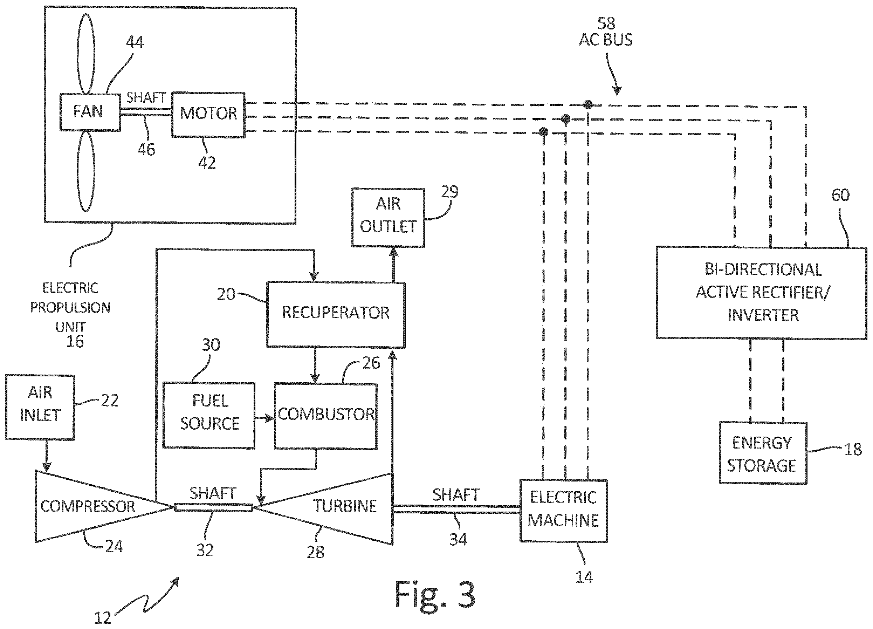

It will be appreciated that recuperator 20 can be incorporated into various other configurations of propulsion system 10 such as propulsion system 10a in FIG. 3 which includes AC bus 58 in lieu of DC bus 40. Like propulsion system 10 described by FIG. 1, propulsion system 10a includes gas turbine 12. Gas turbine engine 12 includes recuperator 20, air inlet 22, compressor 24, combustor 26, turbine 28, and air outlet 29 and functions in a similar manner to drive electric machine 14. However, with propulsion system 10a, AC electric power produced by electric machine 14 is connected to AC bus 58. AC bus 58 interconnects electric machine 14 to propulsion unit 16 and bidirectional active rectifier-inverter 60. Rectifier-inverter 60 connects AC bus 58 to energy storage 18. When excess AC electric power is produced by electric machine 14, rectifier-inverter 60 converts excess AC electric power from AC bus 58 to DC electric power to charge energy storage 18. Conversely, when more electric power is required by propulsion unit 16 or other on-board electrical systems, DC electric power can be discharged from energy storage 18, inverted by rectifier-inverter 60, and supplied to propulsion unit 16, which includes the same components and operates in a manner described with reference to propulsion system 10.

Because the AC electric power required to drive propulsion unit 16 is larger than the AC electric power required to charge energy storage 18, rectifier-inverter 60 of propulsion system 10a is generally smaller and lighter than rectifier-inverters 36 and 48 of propulsion system 10 in FIG. 1 and results in a lighter, less complex propulsion system. However, propulsion system 10a of FIG. 3 does not permit the propulsion unit 16 to be controlled independently of gas turbine engine 12.

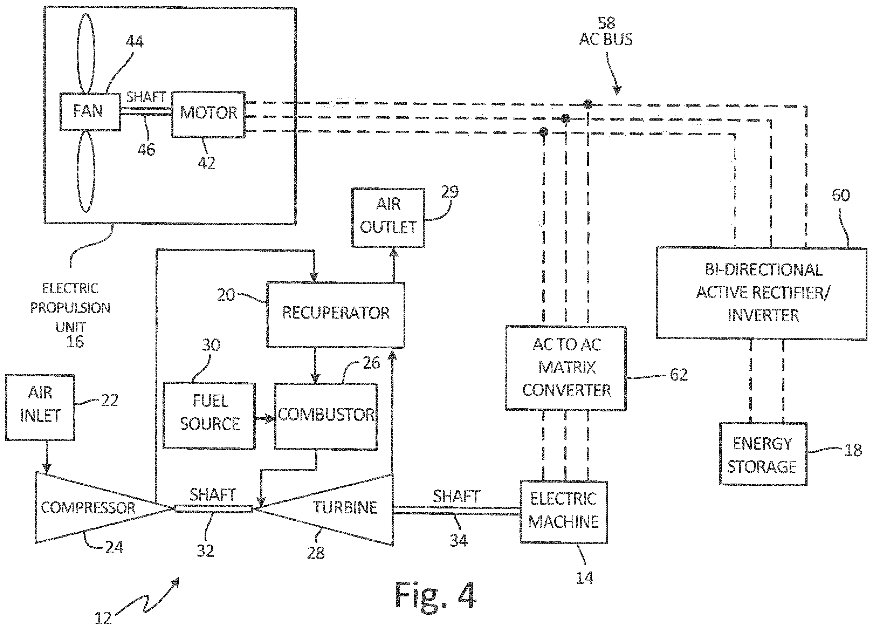

FIG. 4 is a schematic view of propulsion system 10b. Propulsion system 10b includes components that are substantially similar to the components with like numbers described with reference to propulsion system 10a. However, contrary to propulsion system 10a, propulsion system 10b includes AC to AC matrix converter 62 disposed between electric machine 14 and propulsion unit 16 to permit variable voltage, variable frequency control of AC power on AC bus 58. With this addition to propulsion system 10a, propulsion system 10b permits independent control of propulsion unit 16 and gas turbine engine 12. In each of hybrid-electric propulsion systems 10, 10a, and 10b, the thermal efficiency of gas turbine engine 12 can be improved with the inclusion of recuperator 20 to heat the compressed air flow exiting compressor 24 before entering combustor 26 because less fuel is required to heat the air fuel mixture to achieve combustion.

### Discussion of Possible Embodiments

The following are non-exclusive descriptions of possible embodiments of the present invention.

A hybrid-electric propulsion system according to an exemplary embodiment of this disclosure, among other possible things includes a gas turbine engine, an electric machine, an electrical energy storage system, and a propulsion unit. The gas turbine engine includes a combustor and a recuperator. The recuperator places an exhaust air flow that is downstream from the combustor in a heat exchange relationship with a compressed air flow that is upstream from the combustor such that the recuperator transfers thermal energy from the exhaust air flow to the compressed air flow. The electric machine is coupled to and driven by the gas turbine engine and produces AC electric power. The electric energy storage system is capable of storing DC electric power. The propulsion unit includes a fan and an electric motor coupled to the fan. The electric motor is driven by electric power originating from one of the electric machine and the energy storage system.

The hybrid-electric propulsion system of the preceding paragraph can optionally include, additionally and/or alternatively, any one or more of the following features, configurations and/or additional components:

A further embodiment of the foregoing hybrid-electric propulsion systems can further include a DC bus and a bidirectional rectifier-inverter electrically connected between the electric machine and the energy storage system. The bidirectional rectifier-inverter can be configured to convert AC electric power produced by the electric machine to DC electric power and to convert DC electric power from the DC bus to the electric power.

In a further embodiment of any of the foregoing hybrid-electric propulsion system, the electric energy storage system can include a battery and a bidirectional DC to DC converter-charger. The converter-charger can be configured to meter DC electric power received from the DC bus and delivered to the battery, and the converter-charger can be configured to meter DC electric power discharged from the battery and supplied to the DC bus.

In a further embodiment of any of the foregoing hybrid-electric propulsion systems the electric machine can be capable of being driven as a motor when DC electric power supplied from the energy storage system is inverted to AC electric power by the bidirectional rectifier-inverter and supplied to the electric machine.

In a further embodiment of any of the foregoing hybrid-electric propulsion systems the recuperator can be downstream from a compressor rotor and upstream from the combustor.

In a further embodiment of any of the foregoing hybrid-electric propulsion systems the recuperator can be downstream from the combustor and upstream from an exhaust nozzle from which the exhaust gas flow is discharged from the gas turbine engine.

A further embodiment of any of the foregoing hybrid-electric propulsion systems can further include a compressor line and a turbine line. The compressor line can have an inlet disposed downstream from a compressor rotor and upstream from the combustor that extracts at least a portion of the compressed air flow. The turbine line can have an inlet disposed downstream from the combustor and upstream from an exhaust nozzle to extract at least a portion of the exhaust air flow. The exhaust nozzle can be configured to discharge exhaust air flow from the gas turbine engine. The compressor line and the turbine line can be configured to deliver compressed air flow and exhaust air flow, respectively, to the recuperator.

In a further embodiment of any of the foregoing hybrid-electric propulsion systems the exhaust air flow exiting the gas turbine can produce thrust such that the thrust produced by exhaust gases expelled from the gas turbine engine accounts for no more than 10% of a total thrust produced by the hybrid-electric propulsion system.

In a further embodiment of any of the foregoing hybrid-electric propulsion systems the electric motor can be coupled to the fan via gearing.

A method of operating a hybrid-electric propulsion system according to an exemplary embodiment of this disclosure, among other possible things includes operating a gas turbine engine to rotably drive an electric machine that produces AC electric power. The method further includes using an energy storage system to store DC electric power and using electric power from one of the energy storage system and the electric machine to drive an electric propulsion unit. Operating the gas turbine engine includes passing an exhaust air flow through a recuperator that places the exhaust air flow downstream from a combustor in a heat exchange relationship with a compressed air flow upstream from the combustor.

The method of operating a hybrid-electric propulsion system of the preceding paragraph can optionally include, additionally and/or alternatively, any one or more of the following steps, features, configurations and/or additional components:

A further embodiment of the foregoing method can further include intermittently operating the gas turbine engine to rotatably drive the electric machine and using a bidirectional rectifier-inverter to convert AC electric power produced by the electric machine to DC electric power. The method can further include directing the DC electric power produced from the rectified AC electric power to charge an energy storage system during operation of the gas turbine engine. The method can further include using inverted DC electric power originating from the energy storage system to produce AC electric power and to drive the electric propulsion unit when the gas turbine engine is between periods of operation.

A further embodiment of any of the foregoing methods can further include discharging DC electric power from a battery through a bidirectional, DC to DC converter-charger and supplying DC electric power from the converter-charger to the electric propulsion unit.

A further embodiment of any of the foregoing methods can further include supplying DC electric power from the rectifier-inverter to a bidirectional, DC to DC converter-charger electrically connected to a battery.

A further embodiment of any of the foregoing methods can further include extracting at least a portion of the exhaust air flow downstream from the combustor, directing the portion of the exhaust air flow through the recuperator disposed within the compressed air flow between a compressor and the combustor, and directing the compressed air flow into an intel of the combustor.

A further embodiment of any of the foregoing methods can further include extracting at least a portion of the compressed air flow upstream from the combustor, directing the portion of the compressed air flow through the recuperator disposed within the exhaust air flow between the combustor and an exhaust nozzle from which the exhaust air flow discharges, and directing the portion of the compressed air flow to an inlet of the combustor.

A further embodiment of any of the foregoing methods can further include directing a portion of the compressed air flow to the recuperator through a compressor line having an inlet downstream from the compressor and upstream from the combustor, directing aq portion of the exhaust flow through a turbine line having an inlet downstream from the combustor and upstream from an exhaust nozzle to place the compressed air flow in a heat exchange relationship with the exhaust air flow, and directing the compressed air flow to an inlet of the combustor.

A further embodiment of any of the foregoing methods can further include directing DC electric power from the energy storage system to an inverter, using the inerter to produce AC electric power derived from the DC electric power, and using the AC electric power to drive the electric machine as a motor. The method can further include using the electric machine to accelerate the gas turbine to a starting speed.

An aircraft according to an exemplary embodiment of this disclosure, among other possible things includes a propulsion system. The propulsion system includes a gas turbine engine, an electric machine, an electrical energy storage system, and a propulsion unit. The gas turbine engine includes a combustor and a recuperator. The recuperator places an exhaust air flow that is downstream from the combustor in a heat exchange relationship with a compressed air flow that is upstream from the combustor such that the recuperator transfers thermal energy from the exhaust air flow to the compressed air flow. The electric machine is coupled to and driven by the gas turbine engine and produces AC electric power. The electric energy storage system is capable of storing DC electric power. The propulsion unit includes a fan and an electric motor coupled to the fan. The electric motor is driven by electric power originating from one of the electric machine and the energy storage system.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hybrid-electric propulsion system comprising:
a gas turbine engine (12) comprising:
a combustor (26);
a recuperator (20) that places an exhaust air flow that is downstream from the combustor in a heat exchange relationship with a compressed air flow that is upstream from the combustor, wherein the recuperator transfers thermal energy from the exhaust air flow to the compressed air flow;
an electric machine (14) coupled to and rotatably driven by the gas turbine engine that produces AC electric power;
an electrical energy storage system (18) capable of storing DC electric power; and
a propulsion unit (16) comprising:
a fan (44); and
an electric motor (42) rotatably coupled to the fan, wherein the electric motor is driven by electric power originating from at least one of the electric machine and the energy storage system.

2. The hybrid-electric propulsion system of claim 1 and further comprising:
a DC bus (40); and
a bidirectional rectifier-inverter (48) electrically connected between the electric machine and the energy storage system, wherein the bidirectional rectifier-inverter converts AC electric power produced by the electric machine to DC electric power, and wherein the bidirectional rectifier-inverter converts DC electric power from the DC bus to AC electric power.

3. The hybrid-electric propulsion system of claim 2, wherein the electrical energy storage system comprises:
a battery; and
a bidirectional DC to DC converter-charger (50) connected between the DC bus and the battery, wherein the converter-charger is configured to meter DC electric power received from the DC bus and delivered to the battery, and wherein the converter-charger is configured to meter DC electric power discharged from the battery and supplied to the DC bus.

4. The hybrid-electric propulsion system of claim 2, wherein the electric machine is capable of being driven as a motor when DC electric power supplied from the energy storage system is inverted to AC electric power by the bidirectional rectifier-inverter and supplied to the electric machine.

5. The hybrid-electric propulsion system of any preceding claim, wherein the recuperator (20) is downstream from a compressor rotor and upstream from the combustor, or wherein the recuperator (20) is downstream from the combustor and upstream from an exhaust nozzle from which the exhaust gas flow is discharged from the gas turbine engine.

6. The hybrid-electric propulsion system of any preceding claim and further comprising:
a compressor line having an inlet disposed downstream from a compressor rotor and upstream from the combustor that extracts at least a portion of the compressed air flow;
a turbine line having an inlet disposed downstream from the combustor and upstream from an exhaust nozzle to extract at least a portion of the exhaust air flow, wherein the exhaust air flow is discharged from the gas turbine engine through the exhaust nozzle;
wherein the compressor line and the turbine line deliver compressed air flow and exhaust air flow, respectively, to the recuperator.

7. The hybrid-electric propulsion system of any preceding claim, wherein the exhaust air flow exiting the gas turbine produces thrust, and wherein the thrust produced by exhaust gases expelled from the gas turbine engine accounts for no more than 10% of a total thrust produced by the hybrid-electric propulsion system.

8. The hybrid-electric propulsion system of any preceding claim, wherein the electric motor (42) is coupled to the fan (44) via gearing.

9. A method of operating a hybrid-electric propulsion system comprising:
operating a gas turbine engine to rotatably drive an electric machine that produces AC electric power, wherein operating the gas turbine engine comprises:
passing an exhaust air flow through a recuperator that places the exhaust air flow downstream from a combustor in a heat exchange relationship with a compressed air flow upstream from the combustor; and
using an energy storage system to store DC electric power; and
using the electric power from one of the energy storage system and the electric machine to drive an electric propulsion unit.

10. The method of claim 9, and further comprising:
intermittently operating the gas turbine engine to rotatably drive the electric machine, wherein the gas turbine engine is operated at a maximum power condition during operation and is placed in an idle condition or a stopped position between periods of gas turbine operation;
using a bidirectional rectifier-inverter to convert AC electric power produced by the electric machine to DC electric power;
directing the DC electric power produced from the rectified AC electric power to charge an energy storage system during operation of the gas turbine engine; and
using inverted DC electric power originating from the energy storage system to produce AC electric power and to drive the electric propulsion unit when the gas turbine engine is between periods of operation.

11. The method of claim 10, wherein using the DC electric power from the energy storage system to drive the electric propulsion unit comprises:
discharging DC electric power from a battery through a bidirectional, DC to DC converter-charger; and
supplying DC electric power from the converter-charger to the electric propulsion unit.

12. The method of claim 10, wherein using the DC electric power to charge the energy storage system during operation of the gas turbine engine comprises:
supplying DC electric power from the rectifier-inverter to a bidirectional, DC to DC, converter-charger electrically connected to a battery.

13. The method of any of claims 9 to 12, wherein passing the exhaust air flow through the recuperator comprises:
extracting at least a portion of the exhaust air flow downstream from the combustor;
directing the portion of the exhaust air flow through the recuperator, wherein the recuperator is disposed within the compressed air flow between a compressor and the combustor; and
directing the compressed air flow into an inlet of the combustor; or
wherein passing the exhaust air flow through the recuperator comprises:
extracting at least a portion of the compressed air flow upstream from the combustor;
directing the portion of the compressed air flow through the recuperator, wherein the recuperator is disposed within the exhaust air flow between the combustor and an exhaust nozzle from which the exhaust air flow discharges from the gas turbine engine; and
directing the portion of the compressed air flow to an inlet of the combustor; or
wherein passing the exhaust air flow through the recuperator comprises:
directing a portion of the compressed air flow through a compressor line to the recuperator, wherein the recuperator is disposed remotely within the gas turbine engine;
directing a portion of the exhaust air flow through a turbine line to the recuperator to place the portion of the exhaust air flow in a heat exchange relationship with the portion of the compressed air flow; and
directing the portion of the compressed air flow to an inlet of the combustor.

14. The method of claim 10, and further comprising:
directing DC electric power from the energy storage system to the rectifier-inverter;
using the rectifier-inverter to produce AC electric power derived from the DC electric power;
using the AC electric power to drive the electric machine as a motor, and
using the electric machine to accelerate the gas turbine engine to a starting speed.

15. An aircraft comprising:
a propulsion system (10) comprising:
a gas turbine engine (12) comprising:
a combustor (26);
a recuperator (20) that places an exhaust air flow that is downstream from the combustor in a heat exchange relationship with a compressed air flow that is upstream from the combustor, wherein the recuperator transfers thermal energy from the exhaust air flow to the compressed air flow;
an electric machine (14) coupled to and rotatably driven by the gas turbine engine that produces AC electric power;
an electrical energy storage system (18) capable of storing DC electric power; and
a propulsion unit (16) comprising:
a fan (44); and
an electric motor (42) rotatably coupled to the fan, wherein the electric motor is driven by electric power originating from at least one of the electric machine and the energy storage system.
